# EUROPEAN PATENT SPECIFICATION

(11) **EP 3 109 088 B1**
(45) Date of publication and mention of the grant of the patent: **06.06.2018**
(21) Application number: 16176062.4
(22) Date of filing: 23.06.2016
(51) Int. Cl.: B60L 5/12, B60L 11/18

(54) **ELECTRIC POWER SUPPLY STATION FOR AN ELECTRIC URBAN BUS**
STROMVERSORGUNGSSTATION FÜR EINEN ELEKTRISCHEN STÄDTISCHEN BUS
STATION D'ALIMENTATION ÉLECTRIQUE POUR UN BUS URBAIN ÉLECTRIQUE

(30) Priority: 24.06.2015 EP 15173550
(43) Date of publication of application: 28.12.2016
(73) Proprietor: IVECO FRANCE S.A.S., 69200 Vénissieux (FR)
(72) Inventor: GENDRE, Guy, 69003 LYON (FR); LELEU, Gauthier, 38090 VILLEFONTAINE (FR)
(74) Representative: Bongiovanni, Simone

(56) References cited:
- WO-A2-2010/003021
- CN-Y- 201 089 369
- GB-A- 2 475 703
- KR-B1- 101 384 290
- US-A- 5 464 082

## Description

The present invention relates to an electric power supply station for an electric urban bus.

The use of electric bus, i.e. bus powered by electric motors only supplied completely with a number of accumulators carried by the bus, is increasing as these electrical vehicles have a low environmental impact, produce a reduced noise and vibrations and may be easily used in urban centers.

The main drawback of the above bus is the following: the accumulators of the bus have to be frequently charged. To that regard, the bus is provided with a pantograph that is designed to come in contact with power supply lines to provide a DC voltage for the recharge of the accumulators.

Some producers have proposed solutions of stations where the pantograph of the bus may get in contact with powering conductors; however, these solutions are extremely bulky , complex and occupy a lot of space. For these reasons the above proposals have been scarcely adopted by the users of bus fleets.

For instance WO2010/003021 discloses a charging station for electric vehicles comprising a base portion designed to be stably connected to the ground and placed along one side of a dock and a central portion that extends from the base portion along a vertical axis and comprises a number of interconnected tubes (for instance two tubes).

The tubes diverge from a top portion of the central portion to form an integral semi-arch structure having an end portion that is designed to hold a couple of straight conductors. The straight conductors are parallel one with respect to the other and lie in a supply plane that is somewhat parallel to the ground. The semi arch-structure extends above a first side of the dock. CN 201089369Y discloses a structure where vehicles can be charged in parallel on opposite sides of a charging station. It is present a need of the market to provide an electric power supply station that is simple and occupies a reduced space so that it can also be used at a bus stop.

The above need is satisfied by the present invention that relates to a powering station for an electric urban bus as defined in claim 1.

The invention will be described with the need of the accompany drawings wherein:
- Figure 1 shows a first embodiment that does not form a part of the invention.
- Figure 2 shows a large-scale detail of Figure 1.
- Figure 3 shows a second embodiment that does not form a part of the invention.
- Figure 4 shows a third embodiment that does not form a part of the invention.
- Figure 5 shows a fourth embodiment that does not form a part of the invention; and
- Figure 6 shows a fifth embodiment that does not form a part of the invention .
- Figure 7 shows an example of the present invention according to a sixth embodiment.

Number 1 indicates an electric power supply station for an electric urban bus. The electric power supply station 1 is designed to be placed in correspondence of a bus stop and is designed to provide electrical power to the bus 2 when the bus 2 stands at the bus station. The electric urban bus 2 (of known type) is in fact provided with a number of accumulators (not shown) that must be periodically charged drawing a voltage (for instance 600 Volts) from a DC power source.

The powering station 1 comprises a base portion 4 that is suitable to be stably connected to the ground that, in normal use, is formed by an elongated dock 5 that extends along a straight portion of a road portion 6 that forms a parking place for the bus 2. The dock 5 defines a walking surface that lies in a plane that is higher with respect to the plane of the parking place. In the example the base portion 4 has a flat circular shape , but other shapes are possible.

The powering station 1 also comprises a central portion 7 that extends from the base portion 4 along a vertical axis H and is formed by a number of tubular elements 10 joined together. The tubular elements 10, according to the invention, diverge from a top portion of the central portion 7 in a first semi- arch structure 12 and in a second semi-arch structure 13 that are realized integrally with the tubular elements 10 forming the central portion 7. The first semi-arch structure 12 has one free end 12e that is designed to hold a couple of rectilinear metallic conductors 15a, 15b extending parallel one with respect to the other and lying in a plane that is somewhat parallel with the plane of the road portion 6. The second semi-arch structure 13 has one free end 13e that is designed to hold a couple of rectilinear metallic conductors 17a, 17b extending parallel one with respect to the other and lying in a plane that is somewhat parallel with the plane of the road portion 6.

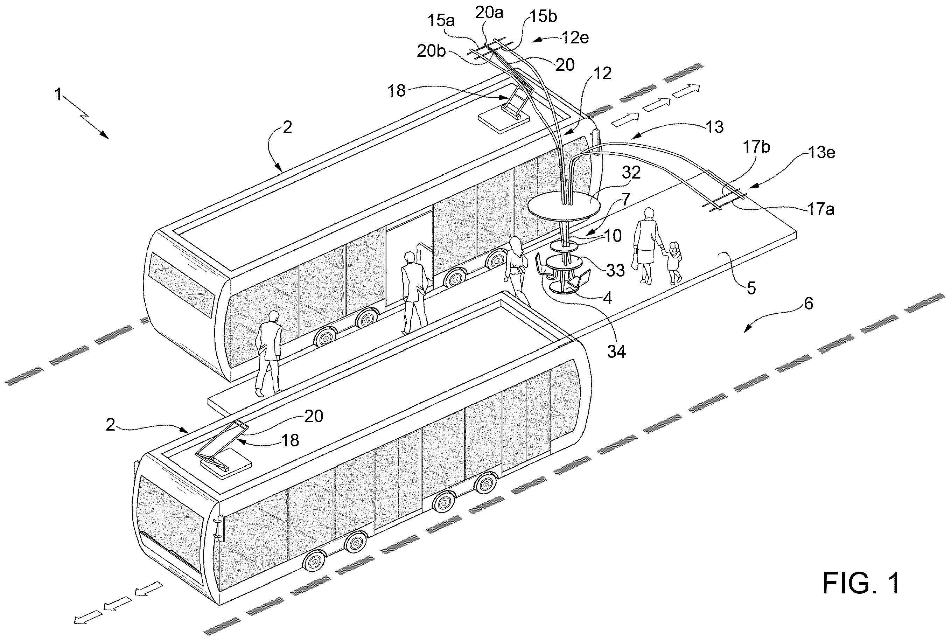

The first and second arch portions 12 and 13 extend towards opposite direction so that the first free end 12e is placed above of a portion of the road portion 6 (figure 1) extending along a first side of the dock 5 and the second free end 13e is placed above of a portion of the road portion 6 extending along a second side of the dock 5. In this way, two buses may mate with a single electric power supply station.

The electric bus 2 is equipped on its roof with a pantograph 18 that is provided with a straight electrically conducting element 20 provided with a first electrically conducting portion 20a designed to rest against the first conductor 15a or 17a and a second electrically conducting portion 20b electrically isolated from electrically conducting portion 20a and designed to rest against the second conductor 15b or 17b.

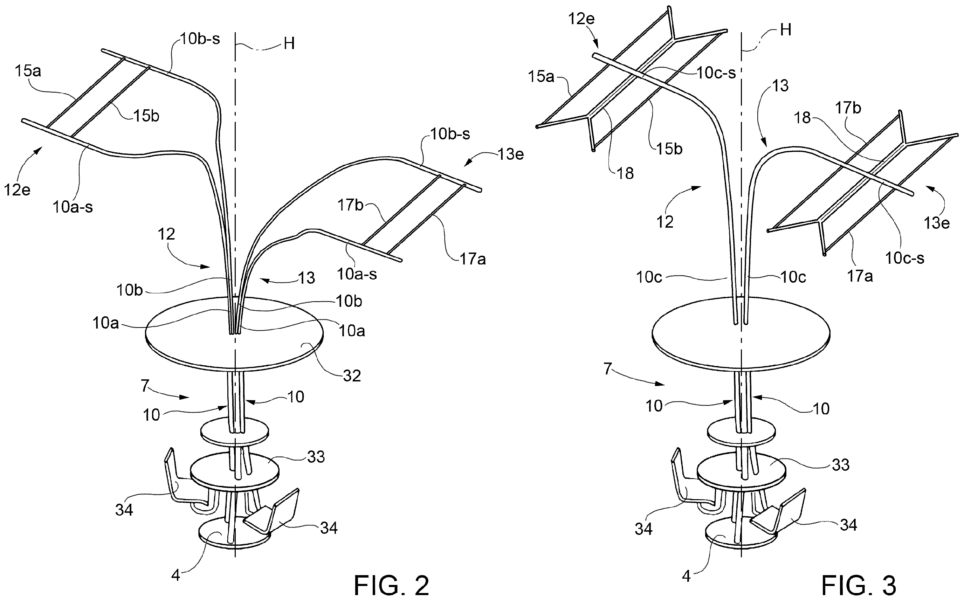

According to Figures 1 and 2 the first semi arch structure 12 and/or the second semi arch structure 13 comprise a first tubular element 10a having one first end connected with the base portion 4 and a second tubular element 10b having a fist end connected with the base portion 4; the first and the second tubular element 10a, 10b touch one with the other in the central portion 7 and diverging one with respect to the other in the upper part of the central portion 7 to form a Y shaped structure. The first and second tubular element 10a, 10b having straight free ends 10a-s, 10b-s parallel one with respect to the other and lying in the same plane. The metallic conductors 15a, 15b are carried by the straight free ends 10as, 10b-s by means of suitable insulators (of known kind - not shown) and extend perpendicular with respect the straight free ends 10a-s, 10b-s. As above outlined, the semi-arch structure described comprises a couple of tubular elements 10.

According to Figure 3 the first semi arch structure 12 and / or the second semi arch structure 13 comprise a single tubular element 10c having one first end connected with the base portion 4 and comprising a first C- shaped portion which is integral with a straight free end 10c-s that lies in such a plane. The metallic conductors 15a, 15b are carried by the straight free end 10c-s by means of suitable metallic structure 18 (of known kind) provided with insulators (not shown) and extend perpendicular with respect the straight free end 10c-s. As above outlined the semi-arch structure described comprise a single of tubular element 10.

In both cases, the electric cables (not represented) that are designed to provide electric power to the metallic conductors extend inside the tubular element so that they are protected from the outside. The straight portions are provided with apertures (not shown) to permit the passage of the cables for their connection with the metallic conductors 15a, 15b.

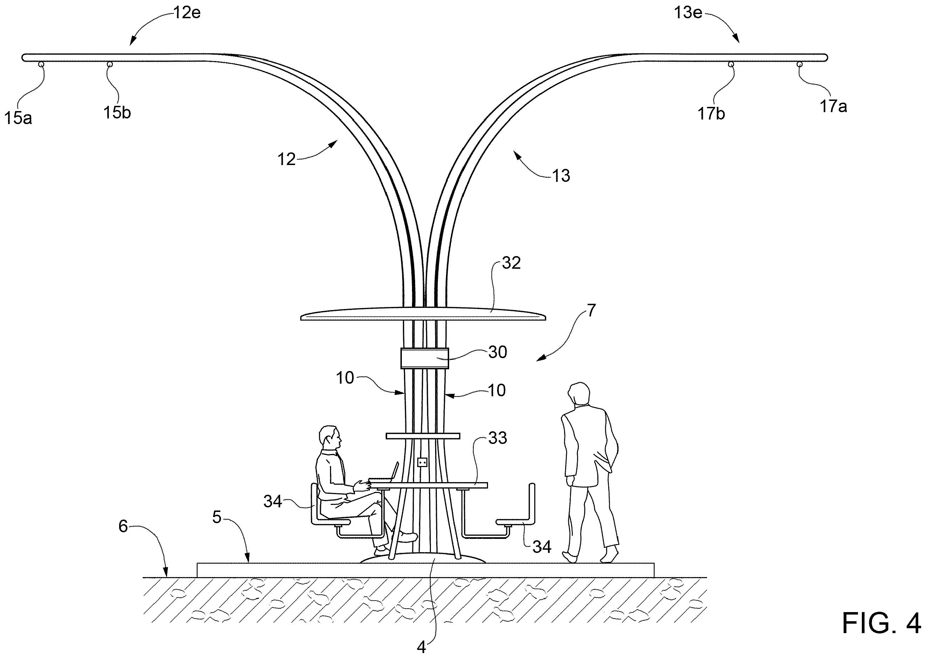

According to Figure 4 the central portion 7 is provided with a central joint 30 (of known type) interposed between a lower portion of the central portion 7 (including the base portion 4) and an upper portion of the central portion 7 from which the semi arch structures branch. The central joint 30 is designed to permit the angular displacement of the upper portion with respect to the lower portion around axis H so that the straight free end may be placed over a place other than the parking place for instance over the dock 5. This permits to free the road 6 so that a vehicle higher than straight portion may pass through the road. According to a non represented fourth embodiment the central joint 30 may also permit a linear displacement of the upper portion with respect to the lower portion to regulate the distance between the straight portion(s) and the road.

The central portion 7 is also equipped with a roof portion 32 provided with holes for the passage of the tubes 10 and designed to give protection from weather elements (rain, snow, ice) to people standing at the bus station. In the example the roof portion 32 is formed by a circular wall perpendicular to axis H.

The central portion 7 is also equipped with a table portion 33 provided with holes for the passage of the tubes 10 and designed to provide supports for objects carried or used (e.g. computers, laptops, cellular phones etc) by people standing at the bus station. In the example the table portion 33 is formed by a circular or annular wall perpendicular to axis H.

The table portion 33 may be equipped with a number of seats 34 connected with the table portion 33 so that they may rotate with respect to the table portion 33 around respective rotating axes parallel to axis H according pivoting systems of known type.

The central portion 7 may also be provided with a number of sockets (shown schematically), for instance sockets placed on table portion 33, for the supply of an AC voltage (50 Hz,220 V) to the users of the bus station. The sockets may be powered by an inverter system (not shown) transforming the DC voltage of the cable in a suitable mains voltage.

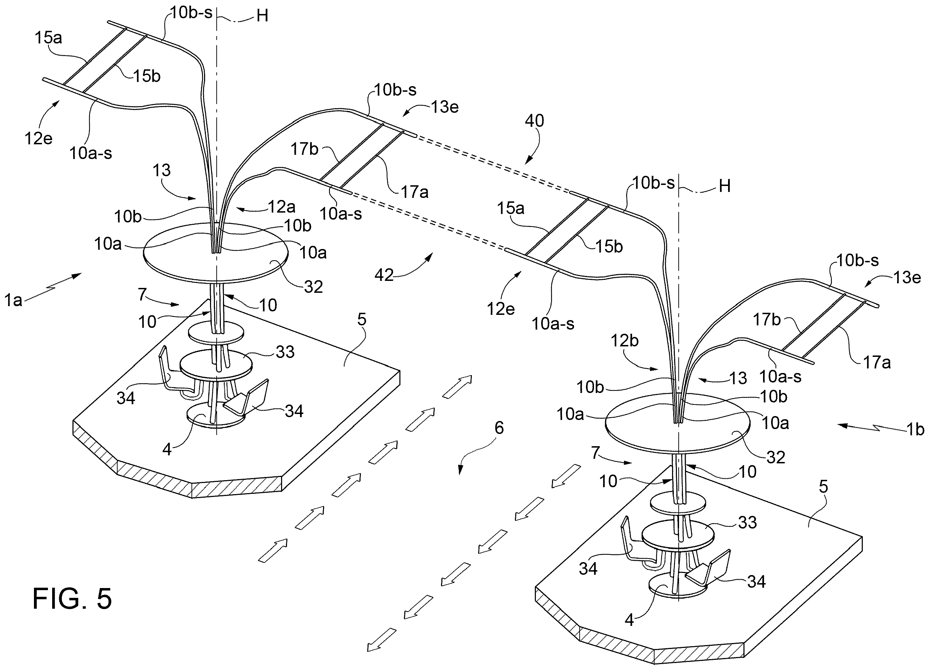

In the fourth embodiment of figure 5, is shown an electric power plant for supplying electric power to a plurality of bus comprising a first electric power supply station 1a as above described with reference to figure 1 and a second electric power supply station 1b as defined with reference to figure 1.

The first semi arch element 12a of the first electric power supply station 1a faces the first semi arch element 12b of the second power supply station 1b. According to the embodiment described in figure 5, it is provided an interconnecting element 40 (shown schematically with dotted line) connecting mechanically and electrically the free ends of the first semi arch element 12a of the first electric power supply station 1a with the free ends of the first semi arch element 12b of the second electric power supply station 1a so that the first and the second semi-arch elements realize a single arch element 42 bridging between the central portion of the first electric power supply station 1a and the central portion of the second electric power supply station 1b. The interconnecting element 40 may preferably comprise tubular elements connected with respective tubular elements 10.

According to this embodiment, it is realized a power supply station having an arch 42 that extends over a road where buses may move according to a first and a second direction (shown in figure 5 with arrows).

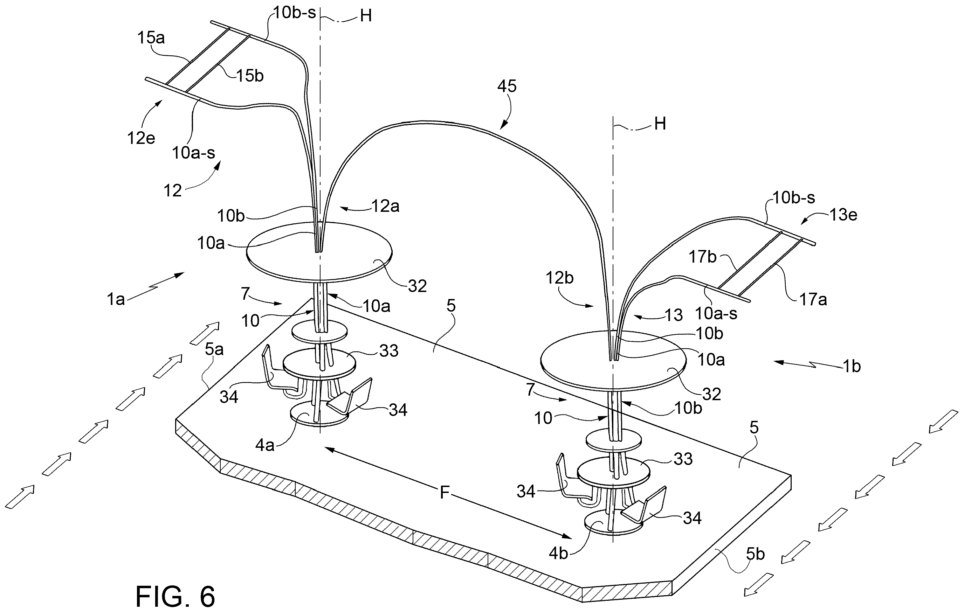

In the embodiment shown in figure 6, the electric power station has a "double" central portion 7 comprising a first group of tubular elements 10a joined together and extending from a first base 4a (connected to the deck 5) and second group of tubular elements 10b joined together and extending from a second base 4b (connected also to the deck 5).

The first group of tubular elements 10a is laterally spaced with respect of the second group of tubular elements 10b of a given distance F measured in a direction that is perpendicular to the main sides 5a, 5b of the deck 5.

According to this embodiment, a tubular arch element 45 extends integrally between top portions of the first group 10a and the second group 10b over the deck 5.

The first semi arch structure 12 extends from the first group of tubular elements 10a on a side opposed to the side where the tubular arch element 45 extends and the second semi arch structure extends from the second group of tubular elements 10b on a side opposed to the side where the tubular arch element 45 extends.

According to this embodiment, it is realized a power supply station having an arch 45 that extends over the deck 5 where people move. In the embodiment shown in figure 6 the first group of tubular elements 10a and the second group of tubular elements 10b are facing one with the other, i.e are not spaced along the main sides 5a, 5b of the deck 5. However, the first group of tubular elements 10a and the second group of tubular elements 10b may also be spaced along the main sides of the deck 5 so that the first group of tubular elements 10a and the second group of tubular elements 10b are not facing one with the other.

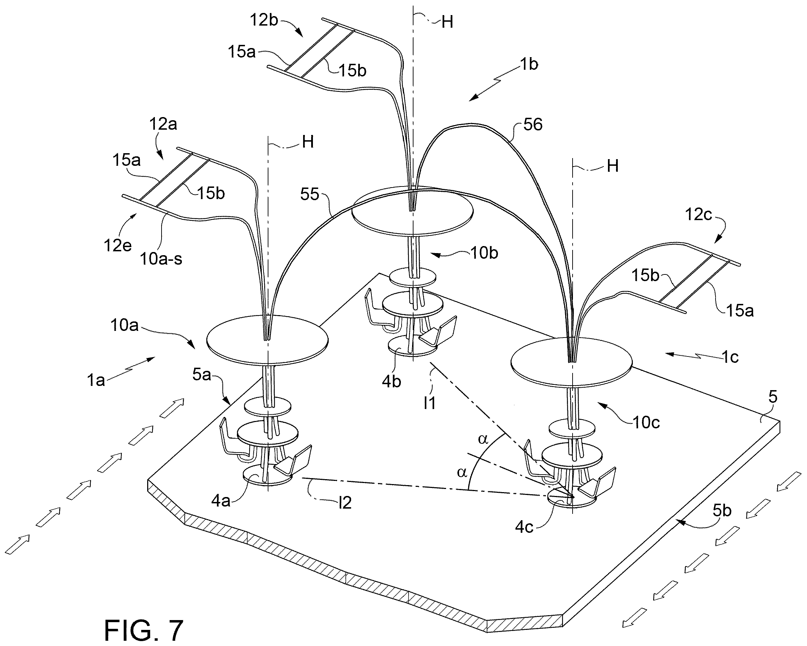

In the embodiment shown in figure 7, the electric power station has a "triple" central portion 7 comprising a first group of tubular elements 10a joined together and extending from a first base 4a (connected to the deck 5), a second group of tubular elements 10b joined together and extending from a second base 4b (connected also to the deck 5) and a third group of tubular elements 10c joined together and extending from a third base 4c (connected to the deck 5).

The first and the second base 4a, 4b are designed to be placed close to a first side 5a of the deck 5 and spaced one with respect to the other along the first side 5a whilst the third base 4c is designed to be placed close to a second side 5b of the deck 5. A line l1, l2 connecting bases 4b, 4a, with base 4c forms an angle alfa with a line perpendicular to sides 5a, 5b.

Each first and second group of tubular elements 10a, 10b diverge from a top portion of the first / second central portion 7 forming respectively a first semi- arch structure 12a that is realized integrally with the tubular elements forming the first central portion 7 and a second semi- arch structure 12b that is realized integrally with the tubular elements forming the second central portion 7.

The third group of tubular elements 10c diverge from a top portion of the third central portion 7 toward the second side 5b forming a third semi- arch structure 12c that is realized integrally with the tubular elements forming the third central portion 7.

Each first, second and third semi-arch structure 12a, 12b and 12c has a free end that is designed to hold a couple of insulated rectilinear metallic conductors 15a, 15b extending parallel one with respect to the other above of a portion of the road portion 6 extending along the first side 5a of the dock 5 and lying in a supply plane that is somewhat parallel with the plane of the road portion 6.

The third semi-arch structure 12c has one free end 12e that is designed to hold a couple of insulated rectilinear metallic conductors 15a, 15b extending parallel one with respect to the other above of a portion of the road portion 6 extending along the second side 5b of the dock 5 and lying in a supply plane that is somewhat parallel with the plane of the road portion (6).

Moreover, according to the invention, a first tubular arch element 55 extends integrally between top portions of the first group 10a and the third group 10c over the deck 5 and a second tubular arch element 56 extends integrally between top portions of the second group 10b and the third group 10c over the deck 5.

According to this embodiment, it is realized a power supply station where the arch elements 55, 56 provide a great stability to the first /second semi-arch structure 12a,12b and to the third semi-arch structure 12c assuring that all conductors 15a, 15b lie in the same horizontal plane. At the same time it has been created an intermediate place under the arches 55 and 56 that extends over the deck where people can move.

In addition one or more semi-arch structure may be realized according the embodiment of figure 3, i.e. comprising a single tubular element 10c having one first end connected with the base portion 4 and comprising a first C shaped portion that is integral with a straight free end 10c-s that carries the metallic conductors 15a, 15b; 17a, 17b.

## Claims

1. Electric power supply station (1) for an electric urban bus designed to be placed in correspondence of a bus stop to provide electrical power to the bus (2) when the bus (2) stands at the bus station, the electric power supply station comprising at least:
- a first base portion (4a), a second base portion (4b), a third base portion (4c) that are suitable to be stably connected to the ground (5) that, in use, is formed by a deck (5) that
extends along a portion of a road portion (6) that forms a parking place for the bus (2); the first and the second base portion (4a, 4b) are designed to be placed close to a first side (5a) of the deck (5) and spaced one with respect to the other along the first side (5a) of the deck (5) whilst the third base portion (4c) is designed to be placed close to a second side (5b) of the deck (5);
a line l1, l2 connecting the first / second base portion (4b, 4a) with the third base portions (4c) forms an angle alpha with a line perpendicular to the first / second side (5a, 5b);
- a first, second and third central portion (7) comprising respectively at least a first group of tubular elements (10a) joined together and extending along a vertical axis from the first base portion (4a), a second group of tubular elements (10b) joined together and extending along the vertical axis from the second base portion (4b) and a third group of tubular elements (10c) joined together and extending along the vertical axis from the third base (4c) portion;
wherein the first group of tubular elements (10a) diverge from a top portion of the first central portion (7) toward the first side forming a first semi- arch structure (12a) that is realized integrally with the tubular elements forming the first central portion (7);
the second group of tubular elements (10b) diverge from a top portion of the second central portion (7) toward the first side forming a second semi- arch structure (12b) that is realized integrally with the tubular elements forming the second central portion (7);
the third group of tubular elements (10c) diverge from a top portion of the third central portion (7) toward the second side forming a third semi- arch structure (12c) that is realized integrally with the tubular elements forming the third central portion (7);
a first tubular arch element (55) extends integrally between top portions of the first group (10a) and the third group (10c) over the deck (5) and a second tubular arch element (56) extends integrally between top portions of the second group (10b) and the third group (10c) over the deck (5);
the first and second semi-arch structure (12a, 12b) has one free end (12e) that is designed to hold a couple or rectilinear metallic conductors (15a, 15b) extending parallel one with respect to the other above a portion of the road portion (6) extending along the first side of the deck (5) and lying in a supply plane that is somewhat parallel with the plane of the road portion (6);
the third semi-arch structure (12c) has one free end (12e) that is designed to hold a couple or rectilinear metallic conductors (15a, 15b) extending parallel one with respect to the other above a portion of the road portion (6) extending along the second side of the deck (5) and lying in the supply plane.

2. The electric power supply station claimed in claim 1, wherein at least one **of the first, second and third** semi arch structure (12a, 12b, 12c) comprise:
a first tubular element (10a) having one first end connected with the base portion (4), and a second tubular element (10b) having a fist end connected with the base portion; the first and the second tubular element (10a, 10b) touching one with the other in the central portion (7) and diverging one with respect to the other in the upper part of the central portion (17) to form a Y shaped structure; the first and second tubular element (10a, 10b) having respective straight free ends (10a-s, 10b-s) parallel one with respect to the other and carrying said metallic conductors (15a, 15b) that extend perpendicular with respect the straight free ends (10a-s, 10b-s).

3. The electric power supply station claimed in claim 1, wherein at least one **of the of the first, second and third** semi arch structure (12, 13) comprise:
a single tubular element (10c) having one first end connected with the base portion (4) and comprising a first C shaped portion that is integral with a straight free end (10c-s) that carries said metallic conductors (15a, 15b; 17a, 17b).

4. The electric power supply station claimed in claim 1, wherein said tubular elements (10) are designed to house electric cables used to provide electric power to the metallic conductors (15a, 15b; 17a, 17b).

5. The electric power supply station claimed in any of the proceedings claims, wherein the central portion (7) is equipped with a roof portion (32) provided with holes for the passage of the tubes (10) and designed to give protection from weather elements to people standing at the bus station.

6. The electric power supply station claimed in any of the proceedings claims, wherein the central portion (7) is equipped with a table portion (33) provided with holes for the passage of the tubes (10) and designed to provide supports for objects carried or used by people standing at the bus station.

7. The electric power supply station claimed in claim 6, wherein the table portion (33) is equipped with a number of seats (34) connected with the table so that they may rotate with respect to the table portion (33) around respective axes parallel to axis H.

8. The electric power supply station claimed in any of the proceedings claims, wherein the central portion (7) is also provided with a number of sockets for the supply of an AC voltage to the users of the bus station.

## Patentansprüche

1. Elektrische Energieversorgungsstation (1) für einen elektrischen Stadtbus, dazu vorgesehen, an einer Bushaltestelle zur Zuführung elektrischer Energie zu dem Bus (2) angeordnet zu werden, wenn der Bus (2) an der Bushaltestelle steht, welche elektrische Energieversorgungsstation zumindest umfasst:
- einen ersten Basisteil (4a), einen zweiten Basisteil (4b), einen dritten Basisteil (4c), dazu geeignet, stabil mit dem Grund (5) verbunden zu werden, welcher in der Benutzung durch ein Deck (5) gebildet wird, welches sich entlang eines Teils eines Straßenbereichs (6) erstreckt, der einen Parkplatz für den Bus (2) bildet, wobei der erste und der zweite Basisteil (4a,4b) dazu ausgebildet sind, nahe einer ersten Seite (4a) des Decks (5) angeordnet werden und voneinander entlang der ersten Seite (5a) des Decks (5) beabstandet zu werden, während der dritte Basisteil (4c) dazu ausgebildet ist, nahe einer zweiten Seite (5b) des Decks (5) angeordnet zu werden,
wobei eine Linie 11,12, welche den ersten/zweiten Basisteil (4b,4a) mit den dritten Basisteilen (4c) verbindet, einen Winkel alpha mit einer Linie senkrecht zu der ersten/zweiten Seite (5a,5b) bildet;
- einen ersten, zweiten und dritten Zentralteil (7), der jeweils zumindest eine erste Gruppe rohrförmiger Elemente (10a) umfasst, welche miteinander verbunden sind und sich entlang einer vertikalen Achse von dem ersten Basisbereich (4a) erstrecken, sowie eine zweite Gruppe rohrförmiger Elemente (10b), welche miteinander verbunden sind und sich entlang der vertikalen Achse von dem zweiten Basisbereich (4b) erstrecken, und eine dritte Gruppe rohrförmiger Elemente (10c), welche miteinander verbunden sind und sich entlang der vertikalen Achse von dem dritten Basisteil (4c) erstrecken;
wobei die erste Gruppe rohrförmiger Elemente (10a) sich von einem oberen Teil des ersten Zentralteils (7) zu der ersten Seite verzweigt und eine erste Halbbogenstruktur (12a) bildet, die einteilig mit den rohrförmigen Elementen ausgebildet ist, welche den ersten Zentralbereich (7) bilden;
die zweite Gruppe rohrförmiger Elemente (10b) sich von einem oberen Teil des zweiten Zentralteils (7) zu der ersten Seite verzweigt und eine zweite Halbbogenstruktur (12b) bildet, welche einteilig mit den rohrförmigen Elementen ausgebildet ist, welche den zweiten Zentralteil (7) bilden;
die dritte Gruppe rohrförmiger Elemente (10c) sich von einem oberen Teil des dritten Zentralteils (7) zu der zweiten Seite verzweigt und eine dritte Halbbogenstruktur (12c) bildet, die einteilig mit den rohrförmigen Elementen ausgebildet ist, die den dritten Zentralteil (7) bilden;
- ein erstes rohrförmiges Bogenelement (55), das sich einteilig zwischen oberen Bereichen der ersten Gruppe (10a) und der dritten Gruppe (10c) über das Deck (5) erstreckt, und ein zweites rohrförmiges Bogenelement (56), das sich einteilig zwischen oberen Teilen der zweiten Gruppe (10b) und der dritten Gruppe (10c) über das Deck (5) erstreckt;
wobei die erste und die zweite Halbbogenstruktur (12a, 12b) ein freies Ende (12e) aufweisen, das dazu ausgebildet ist, ein Paar oder gerade metallische Leiter (15a,15b) zu halten, die sich parallel zueinander oberhalb eines Teils des Straßenbereichs (6) erstrecken, der sich entlang der ersten Seite des Decks (5) erstreckt, und die in einer Versorgungsebene liegen, die etwa parallel zu der Ebene des Straßenbereichs (6) liegt;
und die dritte Halbbogenstruktur (12c) ein freies Ende (12e) aufweist, das dazu ausgebildet ist, ein Paar oder gerade metallische Leiter (15a, 15b) zu halten, die sich parallel zueinander oberhalb eines Teils des Straßenbereichs (6) erstrecken, der sich entlang der zweiten Seite des Decks (5) erstreckt und in der Versorgungsebene liegen.

2. Elektrische Energieversorgungsstation gemäß Anspruch 1, bei welcher zumindest eine der ersten, zweiten und dritten Halbbogenstrukturen (12a, 12b, 12c) umfassen:
Ein erstes rohrförmiges Element (10a), mit einem ersten Ende, das mit dem Basisteil (4) verbunden ist, und ein zweites rohrförmiges Element (10b), mit einem ersten Ende, das mit dem Basisteil verbunden ist, wobei das erste und das zweite rohrförmige Element (10a, 10b) einander in dem zentralen Teil (7) berühren und sich voneinander in dem oberen Teil des zentralen Teils (17) verzweigen, so dass sie eine Y-förmige Struktur bilden, wobei das erste und das zweite rohrförmige Element (10a, 10b) jeweils gerade freie Enden (10a - s, 10b - s) aufweisen, die parallel zueinander stehen und die metallischen Leiter (15a,15b) tragen, die sich senkrecht zu den geraden freien Enden (10a - s, 10b - s) erstrecken.

3. Elektrische Energieversorgungsstation gemäß Anspruch 1, bei welcher zumindest eine der ersten, zweiten und dritten Halbbogenstrukturen (12,13) umfassen:
ein einziges rohrförmiges Element (10c), mit einem ersten Ende, das mit dem Basisteil (4) verbunden ist und einen ersten C-förmigen Teil umfasst, der einteilig mit einem geraden freien Ende (10c - s) ausgebildet ist, welches die metallischen Leiter (15a,15b;17a,17b) trägt.

4. Elektrische Energieversorgungsstation gemäß Anspruch 1, bei welcher die rohrförmigen Elemente (10) dazu ausgebildet sind, elektrische Kabel aufzunehmen, die zur Zuleitung elektrischer Energie zu den metallischen Leitern (15a, 15b; 17a, 17b) verwendet werden.

5. Elektrische Energieversorgungsstation gemäß einem der vorhergehenden Ansprüche, bei welcher der zentrale Teil (7) mit einem Dachteil (32) ausgestattet ist, der mit Löchern zum Durchgang der Rohre (10) versehen ist und dazu ausgebildet ist, die an der Bushaltestelle stehenden Menschen vor der Witterung zu schützen.

6. Elektrische Energieversorgungsstation gemäß einem der vorhergehenden Ansprüche, bei welcher der zentrale Teil (7) mit einem Tischteil (33) ausgestattet ist, versehen mit Löchern zum Durchlass der Rohre (10) und dazu ausgebildet, Lagerflächen für Objekte zu schaffen, die von den an der Bushaltestelle stehenden Menschen getragen und verwendet werden.

7. Elektrische Energieversorgungsstation gemäß Anspruch 6, bei welcher der Tischteil (33) mit einer Anzahl von Sitzen (34) ausgestattet ist, die mit dem Tisch verbunden sind, so dass sie bezüglich des Tischteils (33) um entsprechende Achsen parallel zu der Achse (H) rotieren können.

8. Elektrische Energieversorgungsstation gemäß einem der vorhergehenden Ansprüche, bei welcher der zentrale Teil (7) ferner mit einer Anzahl von Anschlüssen zur Versorgung der Benutzer der Bushaltestelle mit einer Gleichspannung versehen ist.

## Revendications

1. Station d'alimentation en courant électrique (1) pour un bus de ville électrique, conçue pour être placée en correspondance avec un arrêt de bus afin de fournir le courant électrique au bus (2), lorsque le bus (2) est à la station de bus, la station d'alimentation en courant électrique comprenant au moins :
une première partie de base (4a), une deuxième partie de base (4b), une troisième partie de base (4c) qui sont appropriées pour être raccordées, de manière stable, au sol (5) qui, à l'usage, est formé par une plate-forme (5) qui s'étend le long d'une partie d'une partie de route (6) qui forme une place de stationnement pour le bus (2) ; la première et la deuxième partie de base (4a, 4b) sont conçues pour être placées à proximité d'un premier côté (5a) de la plate-forme (5) et espacées l'une de l'autre le long du premier côté (5a) de la plate-forme (5) alors que la troisième partie de base (4c) est conçue pour être placée à proximité d'un second côté (5b) de la plate-forme (5) ;
une ligne l1, l2 raccordant la première / deuxième partie de base (4b, 4a) avec la troisième partie de base (4c), forme un angle alpha avec une ligne perpendiculaire au premier / second côté (5a, 5b) ;
une première, une deuxième et une troisième partie centrale (7) comprenant respectivement au moins un premier groupe d'éléments tubulaires (10a) assemblés ensemble et s'étendant le long d'un axe vertical à partir de la première partie de base (4a), un deuxième groupe d'éléments tubulaires (10b) assemblés ensemble et s'étendant le long de l'axe vertical à partir de la deuxième partie de base (4b) et un troisième groupe d'éléments tubulaires (10c) assemblés ensemble et s'étendant le long de l'axe vertical à partir de la troisième partie de base (4c) ;
dans laquelle :
le premier groupe d'éléments tubulaires (10a) diverge d'une partie supérieure de la première partie centrale (7) vers le premier côté formant une première structure en forme de demi-arc (12a) qui est réalisée de manière solidaire avec les éléments tubulaires formant la première partie centrale (7) ;
le deuxième groupe d'éléments tubulaires (10b) diverge d'une partie supérieure de la deuxième partie centrale (7) vers le premier côté formant une deuxième structure en forme de demi-arc (12b) qui est réalisée de manière solidaire avec les éléments tubulaires formant la deuxième partie centrale (7) ;
le troisième groupe d'éléments tubulaires (10c) diverge d'une partie supérieure de la troisième partie centrale (7) vers le second côté formant une troisième structure en forme de demi-arc (12c) qui est réalisée de manière solidaire avec les éléments tubulaires formant la troisième partie centrale (7) ;
un premier élément arqué tubulaire (55) s'étend de manière solidaire entre les parties supérieures du premier groupe (10a) et du troisième groupe (10c) sur la plate-forme (5) et un second élément arqué tubulaire (56) s'étend de manière solidaire entre les parties supérieures du deuxième groupe (10b) et du troisième groupe (10c) sur la plate-forme (5) ;
les première et deuxième structures en forme de demi-arc (12a, 12b) ont une extrémité libre (12e) qui est conçue pour maintenir un couple ou des conducteurs métalliques rectilignes (15a, 15b) s'étendant parallèlement entre eux au-dessus d'une partie de la partie de route (6) s'étendant le long du premier côté de la plate-forme (5) et se trouvant dans un plan d'alimentation qui est légèrement parallèle au plan de la partie de route (6) ;
la troisième structure en forme de demi-arc (12c) a une extrémité libre (12e) qui est conçue pour maintenir un couple ou des conducteurs métalliques rectilignes (15a, 15b) s'étendant parallèlement entre eux au-dessus d'une partie de la partie de route (6) s'étendant le long du second côté de la plate-forme (5) et se trouvant dans le plan d'alimentation.

2. Station d'alimentation en courant électrique selon la revendication 1, dans laquelle au moins l'une parmi la première, la deuxième et la troisième structure en forme de demi-arc (12a, 12b, 12c) comprend :
un premier élément tubulaire (10a) ayant une première extrémité raccordée à la partie de base (4) et un second élément tubulaire (10b) ayant une première extrémité raccordée à la partie de base ; le premier et le second élément tubulaire (10a, 10b) étant en contact entre eux dans la partie centrale (7) et divergeant l'un de l'autre dans la partie supérieure de la partie centrale (17) afin de former une structure en forme de Y ; les premier et second éléments tubulaires (10a, 10b) ayant des extrémités libres droites (10a-s, 10b-s) respectives parallèles entre elles et portant lesdits conducteurs métalliques (15a, 15b) qui s'étendent perpendiculairement par rapport aux extrémités libres droites (10a-s, 10b-s).

3. Station d'alimentation en courant électrique selon la revendication 1, dans laquelle au moins l'une parmi la première, la deuxième et la troisième structure en forme de demi-arc (12, 13) comprend :
un seul élément tubulaire (10c) ayant une première extrémité raccordée à la partie de base (4) et comprenant une première partie en forme de C qui est solidaire avec une extrémité libre droite (10c-s) qui porte lesdits conducteurs métalliques (15a, 15b ; 17a, 17b) .

4. Station d'alimentation en courant électrique selon la revendication 1, dans laquelle lesdits éléments tubulaires (10) sont conçus pour loger des câbles électriques utilisés pour fournir le courant électrique aux conducteurs métalliques (15a, 15b ; 17a, 17b).

5. Station d'alimentation en courant électrique selon l'une quelconque des revendications précédentes, dans laquelle la partie centrale (7) est équipée avec une partie de toit (32) prévue avec des trous pour le passage des tubes (10) et conçue pour fournir la protection contre les intempéries aux gens qui attendent à la station de bus.

6. Station d'alimentation en courant électrique selon l'une quelconque des revendications précédentes, dans laquelle la partie centrale (7) est équipée avec une partie de table (33) prévue avec des trous pour le passage des tubes (10) et conçue pour fournir le support aux objets transportés ou utilisés par les gens qui attendent à la station de bus.

7. Station d'alimentation en courant électrique selon la revendication 6, dans laquelle la partie de table (33) est équipée d'un certain nombre de sièges (34) raccordés à la table de sorte qu'ils peuvent tourner par rapport à la partie de table (33) autour des axes respectifs parallèles à l'axe H.

8. Station d'alimentation en courant électrique selon l'une quelconque des revendications précédentes, dans laquelle la partie centrale (7) est également prévue avec un certain nombre de prises pour fournir une tension de courant alternatif aux usagers de la station de bus.
